(19) Europäisches Patentamt
European Patent Office
Office européen des brevets

(11) **EP 2 678 739 B1**

(12) **FASCICULE DE BREVET EUROPEEN**

(45) Date de publication et mention
de la délivrance du brevet:
**11.03.2015 Bulletin 2015/11**

(21) Numéro de dépôt: **12704266.1**

(22) Date de dépôt: **14.02.2012**

(51) Int Cl.:
***G02F 1/1362*** *(2006.01)*

(86) Numéro de dépôt international:
**PCT/EP2012/052449**

(87) Numéro de publication internationale:
**WO 2012/113673 (30.08.2012 Gazette 2012/35)**

(54) **MATRICE D'AFFICHAGE À CRISTAUX LIQUIDES À GEOMETRIE D'OUVERTURE IRRÉGULIÈRE**

FLÜSSIGKRISTALLANZEIGEMATRIX MIT UNREGELMÄSSIGER ÖFFNUNGSGEOMETRIE

LIQUID CRYSTAL DISPLAY MATRIX WITH IRREGULAR APERTURE GEOMETRY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.02.2011 FR 1151416**

(43) Date de publication de la demande:
**01.01.2014 Bulletin 2014/01**

(73) Titulaire: **Commissariat à l'Énergie Atomique
et aux Énergies Alternatives
75015 Paris (FR)**

(72) Inventeur: **ROSSINI, Umberto
F-38500 Coublevie (FR)**

(74) Mandataire: **Guérin, Michel
Marks & Clerk France
Conseils en Propriété Industrielle
Immeuble Visium
22, Avenue Aristide Briand
94117 Arcueil Cedex (FR)**

(56) Documents cités:
**WO-A1-00/20920          US-A1- 2004 239 861
US-A1- 2009 262 274**

**Description**

L'invention concerne les afficheurs à cristaux liquides à matrice active et plus précisément les microafficheurs réalisés dans des technologies de fabrication collective (technologie dite LCOS notamment, pour "Liquid Crystal On Silicon" signifiant cristal liquide sur silicium) inspirées des technologies de microélectronique. Dans ces afficheurs, un transistor de commande est associé à chaque pixel de la matrice et ce transistor est intégré sur le même substrat qui comporte les électrodes de commande du cristal liquide.

Un afficheur à matrice active comprend classiquement une matrice de lignes et colonnes de pixels, chaque pixel comportant un cristal liquide entre une électrode de pixel individuelle séparée des électrodes des autres pixels et une contre-électrode commune à tous les pixels. La tension appliquée entre l'électrode de pixel et l'électrode commune produit un champ électrique qui oriente les molécules du cristal liquide en fonction du module du champ. Cette orientation agit sur la polarisation de la lumière qui traverse le cristal de manière à définir, en combinaison avec l'usage de polariseurs, un niveau de transmission de lumière qui dépend du champ électrique appliqué. Un transistor de commande (l'élément actif du pixel) relie l'électrode de pixel de tous les pixels d'une même colonne à un conducteur de colonne respectif. Le conducteur de colonne reçoit à un moment donné une tension analogique définissant un niveau de gris à appliquer au pixel ; si le transistor est conducteur, cette tension est appliquée à l'électrode de pixel ; sinon, le pixel se comporte comme une capacité isolée et conserve le niveau de tension reçu précédemment. Les transistors de commande d'une même ligne de pixels sont commandés par un conducteur de ligne respectif ; ainsi, pendant l'écriture d'une trame d'image, on adresse successivement les différentes lignes de la matrice pour écrire à un instant donné dans les pixels de la ligne adressée l'information appliquée à cet instant par les conducteurs de colonne.

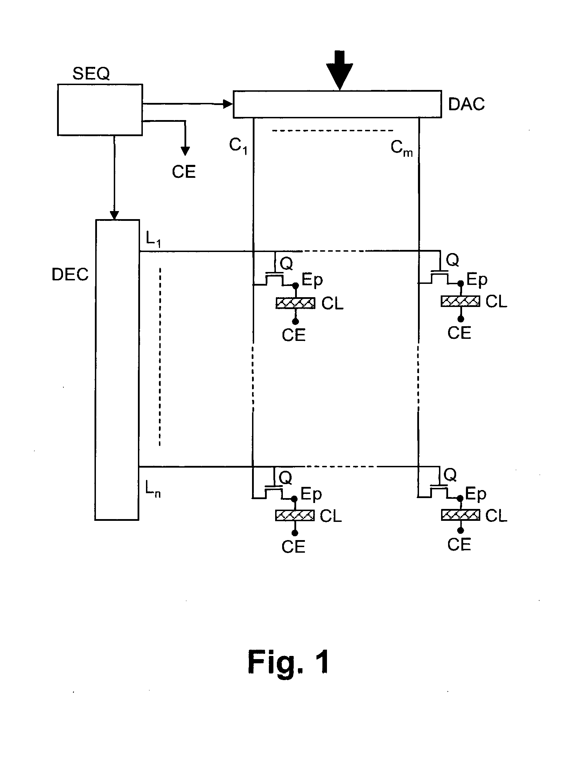

La figure 1 représente la structure générale d'une telle matrice, où CL désigne une cellule à cristal liquide et Q désigne le transistor associé à cette cellule, l'ensemble de la cellule et du transistor formant le pixel. La contre-électrode commune de la cellule est désignée par CE, l'électrode individuelle du pixel, non reliée électriquement aux électrodes individuelles des autres pixels, est désignée par Ep. Les conducteurs de commande en ligne sont désignés par $L_1$ à $L_n$ pour une matrice de n lignes. Les conducteurs de colonne sont $C_1$ à $C_m$ pour une matrice de m colonnes. Un décodeur de ligne DEC adresse successivement les différentes lignes. Un circuit de conversion numérique-analogique DAC applique aux conducteurs de colonne pendant l'adressage d'une ligne un ensemble de tensions analogiques représentant l'image à afficher par cette ligne. Le circuit de conversion établit ces tensions analogiques à partir d'un signal numérique. Un circuit de séquencement SEQ assure le fonctionnement synchronisé du décodeur de ligne et du circuit de conversion DAC.

Le micro-afficheur peut fonctionner en réflexion (c'est le plus souvent dans les technologies LCOS) ou en transmission.

Dans la réalisation de très petits afficheurs à matrice active, la dimension des pixels peut descendre jusqu'à quelques micromètres de côté. Par exemple, le pas des pixels est de 5 micromètres, ce qui est très petit. Dans la surface réservée à un pixel on doit prévoir la place de la ligne d'adressage, de la colonne de signal, et du transistor de commande. Ces éléments occupent une surface qui n'est pas utilisable pour la transmission de lumière à travers le cristal liquide du fait qu'ils sont opaques, par exemple s'il s'agit de conducteurs en cuivre ou aluminium. De plus, le transistor, même s'il n'est pas naturellement opaque, doit être protégé de la lumière par une couche opaque, faute de quoi son fonctionnement pourrait être perturbé par la source de lumière illuminant la matrice.

Il en résulte que la transmission de lumière à travers le pixel ne se fait que sur une partie limitée de la surface globale attribuée au pixel. A titre d'exemple, si le pas est de 5 micromètres en ligne et en colonne, la surface réservée à un pixel est de 25 micromètres carré ; les lignes et colonnes peuvent occuper chacune environ 1 à 2 micromètres carrés sur la longueur du pixel, et le transistor environ 5 micromètres carrés. La surface opaque occupe alors entre 7 et 9 micromètres carrés dans cet exemple. De manière générale, l'ouverture du pixel, c'est-à-dire le rapport entre la surface qui laisse passer la lumière et la surface totale du pixel, est comprise entre environ 65% et 70%.

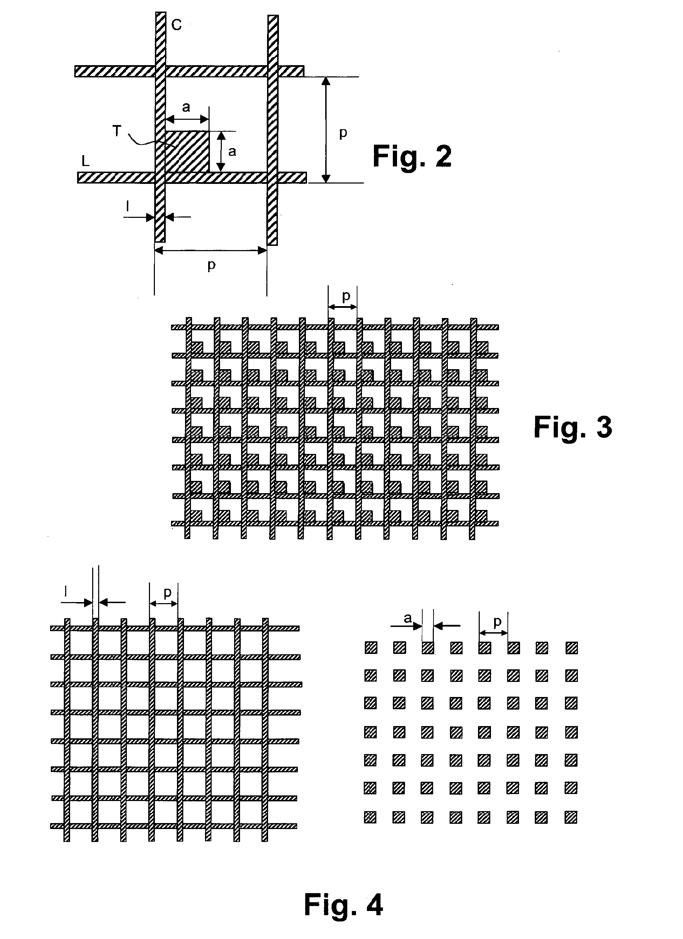

La figure 2 représente symboliquement les zones opaques et transparentes d'un pixel d'une telle matrice. Les conducteurs opaques de ligne et de colonne sont situés sur les bords du pixel et encadrent une zone comprenant d'une part une portion transparente recouverte d'une électrode individuelle transparente et d'autre part un transistor, également opaque, relié à l'électrode de pixel. Pour simplifier, les conducteurs de ligne L et de colonne C sont considérés comme rigoureusement rectilignes, de largeur constante l ; le transistor T est considéré comme étant un carré de côté a, mais il pourrait avoir une autre forme ; le pas du pixel est considéré comme égal à une valeur p aussi bien en ligne qu'en colonne. Le transistor est placé dans le coin en bas à gauche dans l'hypothèse où sa grille est reliée au conducteur de ligne situé juste au-dessous du transistor et son drain est relié au conducteur de colonne situé juste à sa gauche. L'électrode transparente servant à commander le cristal liquide du pixel n'est pas représentée. Elle occupe au moins la surface de l'ouverture laissée libre entre les zones opaques de ligne, de colonne, et de transistor, mais elle peut occuper à peu près toute la surface du pixel.

Avec une configuration géométrique simple telle que celle de la figure 2, on a constaté que la très petite taille des pixels et donc des motifs existant dans le pixel engendrait des défauts optiques dus principalement au fait que la taille des motifs n'est pas très éloignée des longueurs d'ondes de la lumière qui traverse la matrice. La diffraction de la lumière qui en résulte est gênante. Lorsque l'afficheur est utilisé pour observer ou projeter des images, cette gêne affecte la qualité des images. Lorsque l'afficheur est utilisé pour corriger des fronts d'onde dans des optiques de haute qualité, cette gêne se fait encore plus sentir car le niveau de perturbation du à la diffraction peut être supérieur à la correction à effectuer.

L'invention a pour but de réduire autant que possible les défauts optiques constatés, dus à la diffraction de la lumière par les motifs opaques.

Selon l'invention on propose une matrice active à cristaux liquides comportant un réseau régulier de lignes et colonnes de pixels, chaque pixel étant délimité par deux conducteurs de ligne adjacents et deux conducteurs de colonne adjacents, avec pour chaque pixel une zone transparente recouverte par une électrode transparente individuelle et des zones opaques induites par la présence dans le pixel des conducteurs de ligne, des conducteurs de colonne, et d'un transistor de commande du pixel relié à l'électrode du pixel, cette matrice étant caractérisée en ce que le pixel comporte au moins trois configurations géométriques possibles, la position du transistor par rapport aux conducteurs de ligne et de colonne qui délimitent le pixel étant différente dans les différentes configurations, les différentes configurations étant réparties dans de manière pseudo-aléatoire dans au moins une zone de la matrice.

Par pseudo-aléatoire, on entend principalement le fait que la distribution des différentes configurations n'est pas périodique à l'intérieur de la zone. La zone comprend de préférence au moins cent pixels adjacents. Plus précisément, on prévoit que les configurations sont pseudo-aléatoires pour une série d'au moins dix pixels adjacents d'une même ligne ou d'une même colonne, c'est-à-dire qu'il n'y a de périodicité des configurations ni en ligne ni en colonne.

La distribution pseudo-aléatoire de plusieurs configurations géométriques de l'ouverture du pixel, dues à une position variable du transistor de commande, réduit très substantiellement les pics de diffraction qui sont observés lorsque la configuration est la même pour tous les pixels.

Il est préférable de prévoir que toute la matrice est organisée avec une répartition pseudo-aléatoire donc une absence de périodicité totale dans la matrice, que ce soit en ligne ou en colonne. Toutefois, pour des raisons tenant à la facilité de conception des masques de lithographie on peut prévoir que la distribution pseudo-aléatoire se limite à des portions de la matrice, ces portions étant répétées à l'identique ; ceci est possible à condition que le pas de répétition de ces zones soit beaucoup plus grand que le pas des pixels (au moins 10 fois) et bien sûr beaucoup plus grand (au moins cent fois) que les longueurs d'onde de la lumière ; en effet, la diffraction due à la périodicité de motifs larges (donc de dimensions très supérieure à la longueur d'onde) est beaucoup moins critique que la diffraction due à une périodicité rapprochée.

Dans une réalisation préférentielle, les pixels ont cinq configurations possibles.

Les configurations peuvent être dans ce cas les suivantes : transistor en bas à gauche, transistor en bas au milieu, transistor en bas à droite, transistor au milieu à gauche, transistor en haut à gauche. Les colonnes sont supposées orientées verticalement et les lignes horizontalement.

En pratique il se trouvera que dans au moins une des positions géométriques, le transistor est adjacent à un conducteur de ligne (ou respectivement de colonne) mais n'est pas adjacent à un conducteur de colonne (ou respectivement de ligne) auquel il doit être relié. Dans ce cas la liaison risque de réduire l'ouverture du pixel. Pour l'éviter, on prévoit que la liaison entre le transistor et ce conducteur de colonne (ou respectivement de ligne) est faite par un conducteur qui se superpose au conducteur de ligne (ou respectivement de colonne). Il se superpose donc à une zone déjà opaque et ne réduit pas l'ouverture.

Le conducteur de liaison qui vient ainsi se superposer au conducteur de ligne (ou respectivement de colonne) peut être simplement une extension du conducteur de colonne (ou respectivement de ligne), venant au-dessus du conducteur de ligne (ou respectivement de colonne).

D'autres caractéristiques et avantages de l'invention apparaîtront à la lecture de la description détaillée qui suit et qui est faite en référence aux dessins annexés dans lesquels :

- la figure 1 représente le schéma électrique de principe d'une matrice active à cristaux liquides ;
- la figure 2 représente sous forme simplifiée la configuration géométrique d'un pixel de la matrice avec des zones transparentes et des zones opaques ;
- la figure 3 représente l'allure générale d'une matrice de pixels de l'art antérieur ;
- la figure 4 représente une décomposition virtuelle des motifs géométriques de la matrice de la figure 3 ;
- la figure 5 représente un pixel de la matrice selon l'invention, pouvant prendre cinq configurations possibles dans lesquelles la position du transistor varie ;
- la figure 6 représente une manière de connecter le transistor au conducteur de colonne (ou de ligne) sans réduire l'ouverture du pixel lorsque le transistor n'est pas adjacent au conducteur de colonne (ou de ligne) auquel il doit être raccordé ;
- la figure 7 représente la matrice lorsque les cinq configurations sont réparties de manière pseudo-aléatoire dans la matrice.

Sur la figure 3 on a représenté l'allure générale de la matrice active utilisant le pixel de l'art antérieur de la figure 2.

On voit que le motif géométrique se répète régulièrement avec un pas p (quelques micromètres) aussi bien en ligne qu'en colonne (le pas pourrait être différent).

De la petitesse des éléments du motif il résulte une diffraction non négligeable de la lumière qui traverse la matrice. Cette diffraction se produit principalement dans le cas d'une matrice fonctionnant en transmission.

La régularité de la matrice entraîne une diffraction qui n'est pas homogène et qui comporte des pics de diffraction selon des directions bien caractéristiques par rapport à la normale. Ces directions sont liées au rapport entre le pas du réseau de pixels et la longueur d'onde.

Dans un exemple de matrice de pas 5 micromètres avec des lignes et colonnes de largeur 0,2 micromètres et des transistors de côté 2,3 micromètres, on a constaté par simulation des pics de diffraction à des angles qui sont multiples de 5,7° environ pour une certaine longueur d'onde, le pic du premier ordre (centré sur 5,7° de la normale) étant beaucoup plus important que les pics d'ordre supérieur.

En fait, le calcul de la fonction de diffraction permet de montrer que les pics de diffraction résultent de la superposition de diffractions dues uniquement au réseau de lignes et colonnes et de la diffraction due uniquement au réseau de transistors. Le motif géométrique de la figure 3 peut en effet être fictivement décomposé en deux motifs qui sont représentés à la figure 4 : un motif qui ne comporte que des lignes et des colonnes de largeur l encadrant des ouvertures de largeur p-l répétées au pas p ; et un motif qui ne comporte que des carrés opaques de côté a répétés au pas p.

On sait calculer directement, au moins de manière approchée, la fonction de transmission Tlc(x,y) du pixel dans un réseau régulier d'ouvertures carrées de côté (p-l) répétées avec un pas p, x et y étant les coordonnées de points dans le plan de la matrice. Les lignes et colonnes forment bien un tel réseau.

On sait aussi calculer la fonction de transmission d'un pixel Tap(x,y) dans le cas d'un réseau fictif d'ouvertures carrées de côté a répétées au pas p. Le réseau de transistors opaques n'est pas un réseau d'ouvertures carrées de côté a puisque justement les carrés de côté a sont opaques, mais la fonction de transmission Ttr(x,y) du réseau de transistors opaques pris seul (sans les lignes et les colonnes opaques) est le complément à 1 de la fonction de transmission d'une ouverture carrée de côté a.

$$Ttr(x,y) = [1 - Tap(x,y)]$$

Une matrice de $N^2$ pixels éclairée par une source monochromatique de longueur d'onde l va générer une image de diffraction qui, dans l'approximation de Fraunhofer, sera la convolution des transformées de Fourier des fonctions Tlc(x,y) résultant de la présence des lignes et colonnes opaques et Ttr(x,y) résultant du réseau de transistors opaques.

F{Tpix(x,y)} = F{Tlc(x,y)}*conv*F{ Ttr(x,y)} où F désigne la fonction transformée de Fourier, Tpix(x,y) désigne la fonction de transmission des pixels de la figure 2, et *conv* la fonction "produit de convolution".

Sans entrer dans le détail du calcul, on peut montrer que la contribution à la diffraction du réseau de $N^2$ pixels est très largement due au réseau de transistors opaques (fonction Ttr(x,y)) en ce qui concerne le pic de diffraction du premier ordre, et dans une moindre mesure le pic de diffraction du troisième ordre. L'intensité diffractée au pic de diffraction est la même pour un réseau de carrés opaques et un réseau d'ouvertures transparentes de mêmes dimension a et pas p, seule l'intensité non diffractée n'étant évidemment pas la même.

Le calcul avec les dimensions choisies pour la simulation montre que le pic du premier ordre comporte une composante due au réseau de transistors qui est environ 20 fois supérieure à la composante due au réseau de lignes et colonnes.

La largeur des pics varie comme 1/N ; leur hauteur varie en $N^4$. L'intégrale de l'énergie varie en $N^2$.

On ne peut pas empêcher cette diffraction dès lors que les dimensions des zones opaques sont proches de la longueur d'onde. Selon l'invention, on propose de distribuer l'énergie diffractée sur une grande zone angulaire pour éviter des pics localisés à certains angles.

Pour cela, on choisit de rendre irrégulier le réseau de transistors opaques puisque c'est lui qui apporte la plus grande contribution.

On peut par ailleurs, facultativement, donner des formes irrégulières aux lignes et colonnes, pour réduire leur contribution à la diffraction, mais avec des conséquences négatives sur la conductivité des lignes (ou sur l'ouverture des pixels si on augmente la largeur des lignes et colonnes pour compenser la perte de conductivité). Par ailleurs, en donnant aux lignes et aux colonnes des formes irrégulières, la surface des pixels peut devenir variable d'un pixel à l'autre, ce qui se traduit par une charge électrique variable et donc un champ électrique non maîtrisé.

Pour rendre irrégulier le réseau de transistors, on prévoit selon l'invention que le transistor peut occuper plusieurs positions possibles dans la surface du pixel et que les différentes positions sont réparties d'une manière pseudo-aléatoire, c'est-à-dire essentiellement non périodique lorsqu'on se déplace le long d'une ligne ou d'une colonne.

Une certaine périodicité peut exister sur une échelle large, c'est-à-dire une périodicité très supérieure à la longueur d'onde, de préférence au moins cinquante ou cent fois supérieure à la longueur d'onde. Mais à l'échelle d'au moins dix ou vingt pixels adjacents ou plus, en ligne ou en colonne, la distribution des différentes configurations de pixels ne comporte aucune périodicité.

On prévoit qu'il y a dans la matrice au moins trois configurations de pixels différentes, et de préférence au moins cinq.

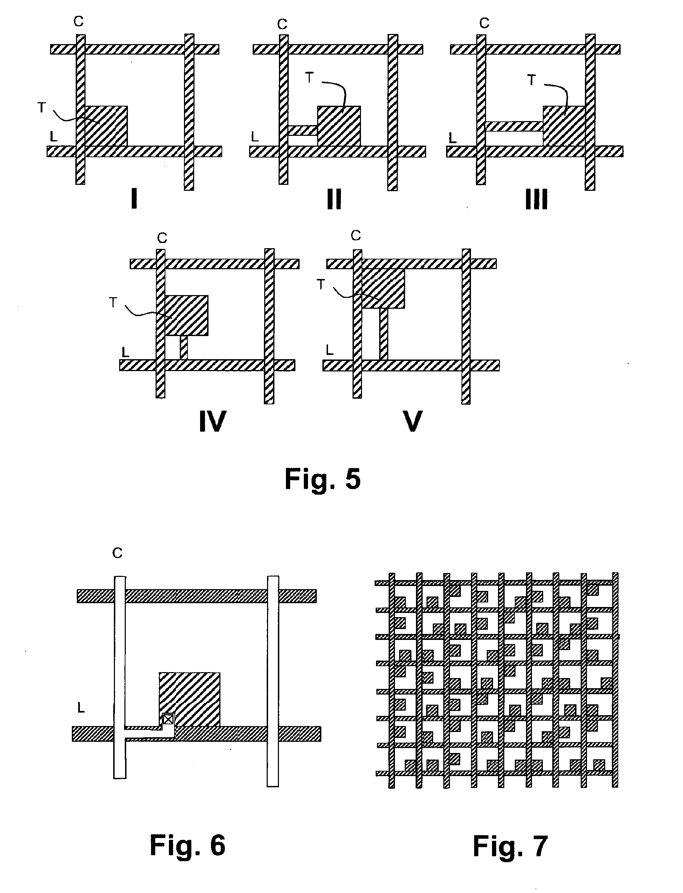

La figure 5 représente cinq configurations géométriques différentes qui seront distribuées de manière pseudo-aléatoire dans la matrice. Ces configurations sont désignées par les chiffres romains I à V. L'hypothèse faite dans cet exemple est que le transistor a toujours sa grille reliée au conducteur de ligne situé au-dessous du transistor et son drain relié au conducteur de colonne situé à gauche du transistor. Lorsque le transistor est à une position où il touche le conducteur de ligne ou de colonne auquel il est relié, on n'a pas représenté la connexion (opaque) de liaison entre le conducteur et le transistor ; mais lorsque le transistor est éloigné du conducteur de ligne situé au-dessous ou du conducteur de colonne situé à gauche, on a représenté une liaison. On notera que cette liaison réduit de quelques pour cent l'ouverture du pixel.

Les configurations adoptées dans cet exemple sont celles où la zone opaque représentant le transistor touche toujours soit le conducteur de ligne soit le conducteur de colonne.

Dans la configuration I, le transistor opaque est situé en bas à gauche ; il est adjacent au conducteur de ligne et de colonne.

Dans la configuration II, le transistor est situé en bas au milieu ; il ne touche que le conducteur de ligne ; une liaison avec le conducteur de colonne est prévue.

Dans la configuration III, le transistor est situé en bas à droite ; la liaison avec le conducteur de colonne est plus longue que dans la configuration II.

Dans la configuration IV, le transistor est situé au milieu à gauche ; une liaison est établie avec le conducteur de ligne.

Enfin, dans la configuration V, le transistor est situé en haut à gauche ; une liaison plus longue est établie avec le conducteur de ligne.

On pourrait prévoir d'autres configurations, et notamment un transistor situé :

- en haut au milieu,
- en haut à droite,
- au milieu au milieu
- au milieu à droite.

On pourra également avantageusement prévoir, si les configurations adoptées sont celles où la zone opaque représentant le transistor touche toujours soit le conducteur de ligne soit le conducteur de colonne, que les liaisons supplémentaires introduites avec les conducteurs de ligne ou de colonne suivant le cas, soient réalisées en superposition respectivement avec les conducteurs de colonne ou de ligne, sur un niveau métallique différent de celui de ces conducteurs et isolé électriquement de ces derniers. Ainsi si le transistor a plusieurs positions différentes le long de la colonne, le signal ligne par exemple va transiter par le métal de ligne qui sera dessiné en superposition avec le conducteur colonne. L'ouverture du pixel ne sera donc pas affectée.

Les configurations de ce type sont avantageuses parce qu'elles ne changent pas l'ouverture du pixel.

La figure 6 illustre cette possibilité : elle représente le transistor dans la même cinquième position géométrique qu'à la figure 5-II, mais on a modifié la liaison conductrice entre le transistor et la ligne par une connexion qui se superpose aux parties déjà opaques et qui ne réduit donc pas l'ouverture du pixel par une zone opaque dédiée à cette liaison comme à la figure V-II. La connexion entre la colonne et le conducteur est ici tout simplement réalisée par une extension du conducteur de colonne qui se superpose au conducteur de ligne avant de rejoindre le transistor. Ces liaisons pourraient aussi être réalisées par un niveau métallique différent de celui des conducteurs de ligne et de colonne.

La figure 7 montre un exemple de matrice utilisant les cinq configurations de la figure 5, distribuées de manière pseudo-aléatoire aussi bien en ligne qu'en colonne. Le motif de la figure 7 peut être répété dans d'autres portions de la matrice (pour la facilité du dessin des masques), la répétition se produisant alors avec un pas de répétition très supérieur à la longueur d'onde, de préférence au moins cent fois la longueur d'onde. En pratique le motif de configurations pseudo-aléatoire qui peut être répété comprend au moins cinquante pixels. Les liaisons nécessitées par l'éloignement entre le transistor et les lignes ne sont pas représentées sur la figure 6 pour ne pas surcharger la figure.

Dans ce qui précède, les zones opaques représentant les transistors ont été représentées, pour simplifier, comme des carrés. Elles peuvent avoir d'autres formes. Des formes présentant des inclinaisons obliques par rapport aux directions des lignes et colonnes favorisent l'étalement des pics de diffraction.. Ainsi on favorisera des géométries de transistors polygonales. Une géométrie octogonale donnera un meilleur étalement qu'une géométrie hexagonale, elle-même meilleure qu'une géométrie carrée.

**Revendications**

1. Matrice active à cristaux liquides comportant un réseau régulier de lignes et colonnes de pixels, chaque pixel étant délimité par deux conducteurs de ligne adjacents et deux conducteurs de colonne adjacents, avec pour chaque pixel une zone transparente recouverte par une électrode transparente et des zones opaques induites par la présence dans le pixel des conducteurs de ligne (L), des conducteurs de colonne (C), et d'un transistor de commande du pixel (T) relié à l'électrode transparente du pixel, cette matrice étant **caractérisée en ce que** le pixel comporte une choisie parmi au moins trois configurations géométriques possibles, la position du transistor par rapport aux conducteurs de ligne et de colonne qui délimitent le pixel étant différente dans les différentes configurations, les différentes configurations étant réparties de manière pseudo-aléatoire dans au moins une zone de la matrice.

2. Matrice active selon la revendication 1, **caractérisée en ce que** la répartition est pseudo-aléatoire sur une zone regroupant au moins cent pixels adjacents.

3. Matrice active selon la revendication 2, **caractérisée en ce que** la matrice comporte un arrangement périodique de plusieurs zones dans lesquelles la configuration géométrique des pixels est pseudo-aléatoire.

4. Matrice active selon l'une des revendications 1 à 3, **caractérisée en ce que** les pixels sont distribués selon au moins cinq configurations possibles.

5. Matrice active selon la revendication 4, **caractérisée en ce que**, dans un repère défini en considérant les conducteurs de ligne comme étant horizontaux et les conducteurs de colonne verticaux, le pixel peut prendre l'une des configurations suivantes : transistor en bas à gauche, transistor en bas au milieu, transistor en bas à droite, transistor au milieu à gauche, transistor en haut à gauche.

6. Matrice active selon l'une des revendications 1 à 5, **caractérisée en ce que** dans au moins une des configurations géométriques, le transistor est adjacent à un conducteur de ligne (ou respectivement de colonne) mais n'est pas adjacent à un conducteur de colonne (ou respectivement de ligne) auquel il doit être relié, et **en ce que** la liaison entre le transistor et ce conducteur de colonne (ou respectivement de ligne) est faite par un conducteur qui se superpose au conducteur de ligne (ou respectivement de colonne).

7. Matrice active selon la revendication 6, **caractérisée en ce que** la liaison par un conducteur qui se superpose au conducteur de ligne (ou respectivement de colonne) est une extension du conducteur de colonne (ou respectivement de ligne) venant au-dessus du conducteur de ligne (ou respectivement de colonne).

**Patentansprüche**

1. Aktive Flüssigkeitskristallmatrix, die ein regelmäßiges Netz aus Pixelzeilen und -spalten aufweist, wobei jedes Pixel von zwei benachbarten Zeilenleitern und von zwei benachbarten Spaltenleitern mit, für jedes Pixel, einer transparenten, von einer transparenten Elektrode bedeckten Zone und opaken, durch die Anwesenheit der Zeilenleiter (L), der Spaltenleiter (C) und eines mit der transparenten Elektrode des Pixels verbundenen Steuertransistors des Pixels (T) in dem Pixel induzierten Zonen begrenzt ist, wobei diese Matrix **dadurch gekennzeichnet ist, dass** das Pixel eine aus mindestens drei möglichen geometrischen Konfigurationen ausgewählte Konfiguration aufweist, wobei die Position des Transistors im Verhältnis zu den Zeilen- und Spaltenleitern, die das Pixel begrenzen, in den verschiedenen Konfigurationen unterschiedlich ist, wobei die verschiedenen Konfigurationen in mindestens einer Zone der Matrix pseudo-zufällig verteilt sind.

2. Aktive Matrix nach Anspruch 1, **dadurch gekennzeichnet, dass** die Verteilung über eine Zone, die mindestens einhundert benachbarte Pixel gruppiert, pseudo-zufällig ist.

3. Aktive Matrix nach Anspruch 2, **dadurch gekennzeichnet, dass** die Matrix eine periodische Anordnung von mehreren Zonen aufweist, in denen die geometrische Konfiguration der Pixel pseudo-zufällig ist.

4. Aktive Matrix nach einem der Ansprüche 1 bis 3, **dadurch gekennzeichnet, dass** die Pixel gemäß mindestens fünf möglicher Konfigurationen verteilt sind.

5. Aktive Matrix nach Anspruch 4, **dadurch gekennzeichnet, dass**, in einem Bezug, der unter Berücksichtigung der als horizontal geltenden Zeilenleiter und der vertikalen Zeilenleiter definiert ist, das Pixel eine der folgenden Konfigurationen annehmen kann: Transistor unten links, Transistor unten Mitte, Transistor unten rechts, Transistor Mitte links, Transistor oben links.

6. Aktive Matrix nach einem der Ansprüche 1 bis 5, **dadurch gekennzeichnet, dass** der Transistor in mindestens einer der geometrischen Konfigurationen zu einem Zeilenleiter (oder beziehungsweise Spaltenleiter) benachbart ist, aber nicht zu einem Spaltenleiter (oder beziehungsweise Zeilenleiter) benachbart ist, mit dem es verbunden sein muss, und dass die Verbindung zwischen dem Transistor und diesem Spaltenleiter (oder beziehungsweise Zeilenleiter) durch einen Leiter erfolgt, der über dem Zeilenleiter (oder beziehungsweise Spaltenleiter) liegt.

7. Aktive Matrix nach Anspruch 6, **dadurch gekennzeichnet, dass** die Verbindung durch einen Leiter, der über dem Zeilenleiter (oder beziehungsweise Spaltenleiter) liegt, eine Erweiterung des Spaltenleiters (oder beziehungsweise Zeilenleiters) ist, die über dem Zeilenleiter (oder beziehungsweise Spaltenleiter) zu liegen kommt.

## Claims

1. An active matrix liquid crystal comprising a regular array of rows and columns of pixels, each pixel being bounded by two adjacent row conductors and two adjacent column conductors, with, for each pixel, a transparent region covered by a transparent electrode and opaque regions resulting from the presence in the pixel of the row conductors (L), of the column conductors (C), and of a control transistor for the pixel (T) connected to the transparent electrode of the pixel, this matrix being **characterized in that** the pixel comprises one among at least three possible geometrical configurations, the position of the transistor with respect to the row and column conductors which bound the pixel being different in the various configurations, the various configurations being distributed in a pseudo-random manner within at least one region of the matrix.

2. The active matrix as claimed in claim 1, **characterized in that** the distribution is pseudo-random over a region comprising a group of at least one hundred adjacent pixels.

3. The active matrix as claimed in claim 2, **characterized in that** the matrix comprises a periodic arrangement of several regions within which the geometrical configuration of the pixels is pseudo-random.

4. The active matrix as claimed in one of claims 1 to 3, **characterized in that** the pixels are distributed according to at least five possible configurations.

5. The active matrix as claimed in claim 4, **characterized in that**, in a reference system defined in considering the row conductors as being horizontal and the column conductors as being vertical, the pixel can take one of the following configurations: transistor at the lower left, transistor in the lower middle, transistor at the lower right, transistor in the center left, transistor at the upper left.

6. The active matrix as claimed in one of claims 1 to 5, **characterized in that**, in at least one of the geometrical configurations, the transistor is adjacent to a row conductor (or respectively a column conductor) but is not adjacent to a column conductor (or respectively a row conductor) to which it is to be connected, and **in that** the connection between the transistor and this column conductor (or respectively row conductor) is provided by a conductor which is superposed on the row conductor (or respectively column conductor).

7. The active matrix as claimed in claim 6, **characterized in that** the connection via a conductor which is superposed on the row conductor (or respectively column conductor) is an extension of the column conductor (or respectively row conductor) running on top of the row conductor (or respectively column conductor).

# Fig. 1

Fig. 2

Fig. 3

Fig. 4

**Fig. 5**

**Fig. 6**

**Fig. 7**